# EUROPEAN PATENT SPECIFICATION

(11) **EP 2 792 645 B1**
(45) Date of publication and mention of the grant of the patent: **28.10.2015**
(21) Application number: 14164874.1
(22) Date of filing: 16.04.2014
(51) Int. Cl.: C02F 1/52, C02F 9/04, C02F 101/14, C02F 1/28, C02F 9/02, C02F 1/00, C02F 1/66

(54) **Process for removing fluorides from water**
Verfahren zur Entfernung von Fluoriden aus Wasser
Procédé d'élimination de fluorures des eaux

(30) Priority: 18.04.2013 IT VE20130017
(43) Date of publication of application: 22.10.2014
(73) Proprietor: Gruppo Zilio S.P.A., 36022 Cassola (IT)
(72) Inventor: Zilio, Damiano, 36022 CASSOLA (IT); Ragazzon, Daniele, 36022 CASSOLA (IT)
(74) Representative: Piovesana, Paolo

(56) References cited:
- WO-A1-02/26640
- GB-A- 2 186 565
- JP-A- H0 686 988
- JP-A- 2007 196 177
- US-A1- 2013 161 264
- US-B1- 6 464 874

## Description

The present invention relates to a process for removing fluorides from water.

In potable water production it is known to use filtration materials based on hydroxyapatite to remove the fluorides present therein.

After a certain time of use the filtration material absorbs its equilibrium fluoride quantity and loses its absorbent capacity.

The filtration mass then has to be regenerated, achieved by bringing the filtration mass into contact for a certain time with a strongly basic aqueous solution (generally 1-2% sodium hydroxide).

The regeneration mechanism involves the hydroxyl ion of the regeneration solution replacing the fluoride ion absorbed by the filtration mass, which consequently releases fluoride which instead pass into the regeneration solution, to enrich it.

In the case of potable water plants, the site of production of these enriched regeneration solutions is located near sources which in their turn lie in the most diverse localities and often in uncomfortable situations.

The liquid effluent produced (containing sodium and fluorides) cannot be accumulated indefinitely and must be transferred to a dump (with resultant costs) or be treated on site by various systems which reduce the fluoride content to below the legal limit for discharge into the sewer network (12 mg/l) or onto surface water (6 mg/l).

A physical treatment system involves evaporation under vacuum.

However this system has the drawback of high treatment cost.

A chemical treatment system involves treating the effluent with calcium hydroxide solutions (basic agent) to precipitate fluorite in accordance with the following reaction Ca(OH)₂ + 2F⁻ → 2 OH⁻ + CaF₂ ↓

This method has however the drawback that for values of pH=14, the residual F concentration is about 50 mg/l, i.e. a value which under current regulations is unacceptable.

On the other hand, the expedient of operating in a lower pH environment, for example pH=12, on the one hand enables a fluoride concentration to be achieved (about 0.54 mg/l) which is below the legal limit, whereas on the other hand the reaction speed is very slow and several weeks are required to reach equilibrium, making it impossible to achieve effective fluoride removal in a reasonable time.

The document GB 2186565 describes a fluoride removal method in which a first step is provided using Ca(OH)₂ followed by treatment with ion exchange resins.

The object of the invention is to eliminate these drawbacks by providing a chemical process which enables fluorides to be removed from water, in particular from filtration mass regeneration water, in a simple, rapid and comfortable manner.

This object is attained according to the invention by a process for removing fluorides from water as described in claim 1.

A preferred embodiment of the present invention is described hereinafter by way of non-limiting example with reference to the ensuing description.

The process according to the present invention consists of treating the regeneration solution incorporating the fluorides with calcium hydroxide in a stoichiometric ratio of calcium equivalents/fluoride equivalents between 1.5 and 3, i.e. very high values, and agitating for a time between 45 and 120 minutes at a temperature less than 45°C, during which the Ca ion has sufficient time to react with the F⁻ ion.

As the CaF₂ obtained is in the form of very small particles, less than 1 µ, requiring a time exceeding 24 h for complete sedimentation, a flocculant (for example polyacrylamide) is added to aggregate the CaF₂ particles and obtain precipitation in a time less than 2 h. Moreover the flocculant also causes aggregation of the excess Ca(OH)₂ and consequent sedimentation thereof. In this manner the supernatant is substantially free of solid CaF₂ and Ca(OH)₂.

The sludge containing CaF₂ and Ca(OH)₂ is separated, the solution is acidified (for example with CO₂) to neutral pH, and an Al complex (for example PACI) is added to form a poorly soluble F/Al complex.

The pH is then increased to at least 8.5 by adding Ca(OH)₂ or NaOH such that an anionic polyelectrolyte can be effectively added as flocculant to obtain a second sludge which is separated from the solution.

The fluoride concentration in the residual solution is measured, and if this concentration exceeds a predetermined value the solution is newly acidified until neutral pH is achieved. After to the remaining solution an Al compound is added to obtain a sludge consisting of a poorly soluble compound of F and Al and the solution is basified until a pH greater than 8.5 is achieved. Finally a a flocculating agent is added to the solution and the sludge obtained is separated therefrom and the concentration of the fluorides is measured in the residual solution.

Experimental tests have shown that starting from a litre of solution containing 300 mg/l of fluoride and adding 1.8 g of calcium hydroxide, after 15 min the fluoride present in solution still has a concentration greater than 100 mg/l.

On termination of sedimentation with the flocculant, after about 90 minutes the solution has a fluoride content of about 35 mg/l.

This result is attributable to the fact that with high calcium hydroxide quantities, a suspension sufficiently concentrated in this latter is formed such as to obtain a solid phase on which the fluoride ions or the calcium fluoride just formed can be adsorbed.

This test was confirmed by the fact that if the analysis is carried out before adding the flocculant, a high fluoride concentration is still found, whereas after sedimentation, which removes the suspended solids from the solution, a low fluoride content is found.

If this solution is again treated under agitation with Ca(OH)₂, adding the flocculant and leaving for about 90 min for sedimentation, the concentration of F on the liquid supernatant does not fall below the previous value of 35 mg/l.

The solution with 35 mg/l was acidified with CO₂ until pH=7 was achieved; PACI was added under agitation, the pH was again increased to 8.5 and a flocculant was added. After separating the solid sediment the concentration of the fluorides in the supernatant was found to be 8 mg/l. This solution was again acidified with CO₂, PACI was added under agitation, the pH was increased to 8.5 and the flocculant was added.

After separating the solids, the concentration of the fluorides in the supernatant was found to be 2 mg/l. This demonstrates that the treatment with an aluminium salt is of additive type. It follows that a treatment which comprises a first step of treatment with calcium hydroxide (followed by sedimentation), followed by one or more steps of treatment with PACI, enables a result to be obtained which in the past was not possible to obtain with Ca(OH)₂ alone, even with an unlimited number of passages, or with PACI alone with a large number of passages.

## Claims

1. A process for removing fluorides from water, comprising a step of treating the water to be purified with calcium hydroxide in a concentration between 1.5 and 3 equivalents of calcium per equivalent of fluoride in which said water and said calcium hydroxide are agitated for a time between 45 and 120 minutes at a temperature less than 45°C, **characterised by**:
a) adding a flocculating agent to the solution to sediment the sludge formed from Ca(OH)₂ and CaF₂
b) separating from the solution a first sludge containing Ca(OH)₂ and CaF₂ in excess
c) acidifying the solution until neutral pH is achieved
d) adding to the remaining solution an Al compound to obtain a second sludge consisting of a poorly soluble compound of F and Al
e) basifying the solution until a pH greater than 8.5 is achieved
f) adding a flocculating agent to the solution
g) separating said second sludge from the solution
h) measuring the concentration of the fluorides in the residual solution and, if this concentration exceeds a predetermined value, repeating steps c) - h).

2. A process as claimed in claim 1, **characterised by** using polyacrylamide as flocculating agent.

3. A process as claimed in claim 1, **characterised by** using PACI as the Al compound.

## Patentansprüche

1. Verfahren zur Entfernung von Fluoriden aus Wasser, umfassend einen Schritt des Behandelns des zu reinigenden Wassers mit Calciumhydroxid in einer Konzentration zwischen 1,5 und 3 Äquivalenten Calcium pro Äquivalent Fluorid, wobei das Wasser und das Calciumhydroxid für eine Zeitspanne zwischen 45 und 120 Minuten bei einer Temperatur unter 45 °C bewegt werden, **gekennzeichnet durch**:
a) das Zusetzen eines Fällmittels zu der Lösung, um den aus Ca(OH)₂ und CaF₂ gebildeten Schlamm zu sedimentieren
b) das Abtrennen, von der Lösung, eines ersten Ca(OH)₂ und CaF₂ im Überschuss enthaltenden Schlamms
c) das Ansäuern der Lösung, bis ein neutraler pH-Wert erreicht wird
d) das Zusetzen zu der verbleibenden Lösung einer Al-Verbindung, um einen zweiten Schlamm zu erhalten, der aus einer schlecht löslichen Verbindung von F und Al besteht
e) das Basifizieren der Lösung, bis ein pH-Wert von über 8,5 erreicht wird
f) das Zusetzen eines Fällmittels zu der Lösung
g) das Abtrennen des zweiten Schlamms von der Lösung
h) das Messen der Konzentration der Fluoride in der restlichen Lösung und, wenn diese Konzentration einen vorbestimmten Wert übersteigt, das Wiederholen der Schritte c) - h).

2. Verfahren nach Anspruch 1, **gekennzeichnet durch** Verwenden von Polyacrylamid als Fällmittel.

3. Verfahren nach Anspruch 1, **gekennzeichnet durch** Verwenden von PACI als Al-Verbindung.

## Revendications

1. Procédé pour l'élimination de fluorures d'une eau, comprenant une étape consistant à traiter l'eau à purifier avec de l'hydroxyde de calcium en une concentration comprise entre 1,5 et 3 équivalents de calcium pour un équivalent de fluorure dans laquelle ladite eau et ledit hydroxyde de calcium sont agités pendant une durée comprise entre 45 et 120 minutes à une température inférieure à 45 °C, **caractérisé par** :
a) l'ajout d'un agent floculant à la solution pour faire sédimenter la boue formée à partir de Ca(OH)₂ et de CaF₂
b) la séparation de la solution d'une première boue contenant du Ca(OH)₂ et du CaF₂ en excès
c) l'acidification de la solution jusqu'à ce qu'un pH neutre soit atteint
d) l'ajout à la solution restante d'un composé d'Al pour obtenir une seconde boue constituée d'un composé peu soluble de F et d'Al
e) la basification de la solution jusqu'à ce qu'un pH supérieur à 8,5 soit atteint
f) l'ajout d'un agent floculant à la solution
g) la séparation de ladite seconde boue de la solution
h) la mesure de la concentration des fluorures dans la solution résiduelle et, si cette concentration dépasse une valeur prédéfinie, la répétition des étapes c) à h).

2. Procédé selon la revendication 1, **caractérisé par** l'utilisation de polyacrylamide en tant qu'agent floculant.

3. Procédé selon la revendication 1, **caractérisé par** l'utilisation de PACl en tant que composé d'Al.
